# FASCICULE DE BREVET EUROPEEN

(11) **EP 0 629 160 B1**
(45) Date de publication et mention de la délivrance du brevet: **23.04.1997**
(21) Numéro de dépôt: 94903707.1
(22) Date de dépôt: 13.01.1994
(51) Int. Cl.: B60P 3/42, B60P 1/64, B62D 53/08

(54) **DISPOSITIF POUR VEHICULE DE TRANSPORT ROUTIER OU DE MANOEUVRE ET VEHICULE EQUIPE D'UN TEL DISPOSITIF**
EINRICHTUNG FÜR EIN STRASSENTRANSPORTFAHRZEUG ODER EIN MANÖVERFAHRZEUG UND FAHRZEUG MIT EINER SOLCHEN EINRICHTUNG
DEVICE FOR A ROAD HAULAGE OR HANDLING VEHICLE AND VEHICLE PROVIDED THEREWITH

(30) Priorité: 13.01.1993 BE 9300032
(43) Date de publication de la demande: 21.12.1994
(73) Titulaire: DELTOMME, Marc, B-1600 Saint-Pieters Leeuw (BE)
(72) Inventeur: DELTOMME, Marc, B-1600 Saint-Pieters Leeuw (BE)
(74) Mandataire: Plucker, Guy
(86) Numéro de dépôt international: BE9400003
(87) Numéro de publication internationale: WO9415813

(56) Documents cités:
- EP-A- 0 234 381
- EP-A- 0 358 541
- EP-A- 0 513 623
- FR-A- 1 528 767
- GB-A- 1 371 812
- US-A- 4 969 690

## Description

L'invention concerne un dispositif destiné à être monté sur un véhicule de transport routier ou de manoeuvre et un véhicule équipé d'un tel dispositif.

Dans le domaine du transport routier, on connaît des véhicules automobiles du type camion équipés d'un dispositif porte-conteneur capable de charger un conteneur sur le véhicule, de porter et maintenir le conteneur sur le véhicule pendant le transport et de décharger le conteneur du véhicule. Des dispositifs de ce type permettent également de basculer le conteneur afin de le vider.

Par ailleurs, on connaît également des véhicules tracteurs équipés d'un dispositif à sellette pour semi-remorque.

Comme, dans le domaine du transport, on a de plus en plus recours à des équipements standardisés, il est possible de fixer de façon interchangeable, sur le châssis d'un même véhicule, aussi bien un dispositif porte-conteneur qu'un dispositif à sellette pour semi-remorque.

Pour autant que l'on dispose de ces deux types de dispositifs, il est des lors possible de convertir un tracteur de semi-remorque en un véhicule porte-conteneur, et inversement.

Une telle transformation du véhicule nécessite notamment que le véhicule passe dans une station équipée pour ce type d'échange et entraîne une perte de temps importante.

En outre, chaque échange affaiblit les dispositifs de fixation dont la totale sécurité ne peut être garantie à la longue.

De toute manière, avec les dispositifs existants, un même véhicule ne peut pas à tout moment, et suivant les besoins, remplir la fonction de porte-conteneur ou de tracteur de semi-remorque.

On connaît par FR-1528767 un camion pour la manipulation et le transport de caissons très lourds et encombrants, réalisé sous la forme d'un tracteur routier muni à l'arrière de son châssis d'une sellette pour l'attelage d'une semi-remorque. Le camion comprend une plate-forme basculant autour d'un axe horizontal porté par le châssis entre la cabine du camion et la sellette, de façon à pouvoir être, soit rabattue horizontalement autour de la sellette au-dessus de laquelle elle dépasse, soit rabattue pratiquement à la verticale derrière la cabine du camion, tandis qu'au voisinage de ce même axe d'articulation horizontal on fait pivoter la base d'un premier portique sur le sommet duquel est articulé un second portique ou flèche susceptible de basculer vers l'arrière pour manipuler un caisson au moyen d'une palonnier actionné par un câble de levage suspendu à son extrémité libre.

Ce camion est pourvu d'un équipement encombrant et n'est pas conçu pour la manipulation rapide de conteneurs standardisés. En outre, pour passer de sa fonction de transport de caissons à la traction de semi-remorques, il requiert un important déploiement de pièces mobiles.

Le but de la présente invention est de procurer un dispositif grâce auquel un véhicule automobile du type camion peut passer très aisément et instantanément de la fonction de porte-conteneur à celle de tracteur de semi-remorque, et inversement.

L'invention a également pour but de procurer un tel dispositif grâce auquel le véhicule qui en est équipé peut remplir tant la fonction de porte-conteneur que celle de tracteur de semi-remorque, sans que les caractéristiques de conduite ne soient différentes de celles des porte-conteneurs ou tracteurs classiques.

On comprendra aisément que le fait de pouvoir, avec un même véhicule polyvalent, transporter des conteneurs ou tracter des semi-remorques, permet un gain de temps important et une très grande souplesse d'utilisation d'une flotte de véhicules.

La présente invention a pour objet un dispositif destiné à être monté sur le châssis d'un véhicule de transport routier ou de manoeuvre. Ce dispositif comprend des moyens de manutention et de maintien pour conteneurs comportant:
- un bâti en forme de cadre allongé apte à être fixé au châssis du véhicule, ce bâti comportant deux poutres destinées à être disposées sensiblement suivant la direction de progression du véhicule, des extrémités avant et arrière destinées à être disposées respectivement vers l'avant et vers l'arrière du véhicule,
- un basculeur comportant une extrémité arrière et monté à pivotement autour d'un premier axe horizontal perpendiculaire à la direction de progression du véhicule, porté par la partie arrière du bâti et une extrémité avant disposée en direction de l'extrémité avant du bâti,
- un bras basculant comportant une extrémité arrière montée à pivotement autour d'un second axe horizontal, parallèle au dit premier axe horizontal, ce second axe horizontal étant porté par la partie avant du basculeur, et une extrémité avant disposée en direction de l'extrémité avant du bâti, cette extrémité avant étant munie de moyens aptes à saisir un conteneur pour le charger sur le véhicule ou pour l'en décharger,
- des moyens d'actionnement aptes à faire pivoter ledit bras basculant autour dudit premier axe ou autour dudit second axe.
- des roues à gorge montées sur des axes horizontaux parallèles au dit premier axe horizontal, aptes à guider le châssis d'un conteneur, qui supportent la face inférieure de ce conteneur, lorsque celui-ci est chargé ou déchargé du véhicule,
- des moyens de verrouillage aptes à fixer un conteneur sur ledit dispositif.

Ce dispositif est caractérisé en ce qu'il comporte des moyens d'attelage pour une semi-remorque consistant en une sellette apte à recevoir une cheville ouvrière d'une semi-remorque, la dite sellette étant fixée sur le basculeur , la position de ladite sellette étant telle qu'elle ne gêne ni les manoeuvres d'une semi-remorque couplée à ladite sellette , ni la manoeuvre d'un conteneur fixé au-dessus de ladite sellette .

De manière avantageuse, un tel dispositif suivant l'invention comporte en outre un moyen apte à bloquer la position du basculeur par rapport au bâti.

Les moyens d'actionnement qui permettent de faire pivoter le bras basculant autour dudit premier axe horizontal sont, de préférence, des vérins hydrauliques.

Le bras basculant quant à lui est avantageusement un bras télescopique et ce bras télescopique est de préférence actionné au moyen d'un vérin hydraulique.

Suivant une forme d'exécution préférée de l'invention, ladite sellette comporte une embase sur laquelle la partie supérieure de la sellette est montée à pivotement autour d'un axe horizontal perpendiculaire à la direction de l'avancement du véhicule; le dispositif est pourvu de moyens aptes à verrouiller l'embase de la sellette par rapport au bâti en sorte que lorsque le dispositif est utilisé pour l'attelage d'une semi-remorque, ces moyens de verrouillage permettent de transmettre directement au bâti les sollicitations imposées à l'embase de la sellette.

De manière particulière, le bâti du dispositif comporte :
- une partie avant, vers le côté du dispositif destiné à être fixé vers l'avant du châssis du véhicule, apte à supporter le châssis d'un conteneur et
- une partie arrière, surbaissée par rapport à la partie avant, de façon telle que cette partie arrière surbaissée ne gêne pas les manoeuvres d'une semi-remorque qui serait accrochée à la sellette, la partie arrière du dispositif comportant latéralement de part et d'autre au moins un élément de support apte à supporter la partie arrière du châssis du conteneur lorsque ce conteneur est chargé sur le véhicule.

De manière particulière, lesdits éléments de support peuvent être constitués par des roues à gorge. Toutefois, des éléments de support supplémentaire peuvent également être prévus.

Lorsque le dispositif est monté sur le châssis d'un véhicule, la position de la sellette occupe d'une manière avantageuse la position normalisée qu'occupe une sellette sur un tracteur de semi-remorque. C'est ainsi que lorsque le dispositif est monté sur le châssis du véhicule, la sellette est située sensiblement à 1,5 m du sol et que l'axe de sellette est situé sensiblement à 0,1 m en avant du centre de gravité du train arrière du véhicule.

La présente invention a également pour objet un véhicule de transport routier ou de manoeuvre muni d'un dispositif tel que défini ci-dessus.

Suivant une forme d'exécution particulière, ledit véhicule est en outre muni d'un crochet d'attelage permettant de tracter une remorque.

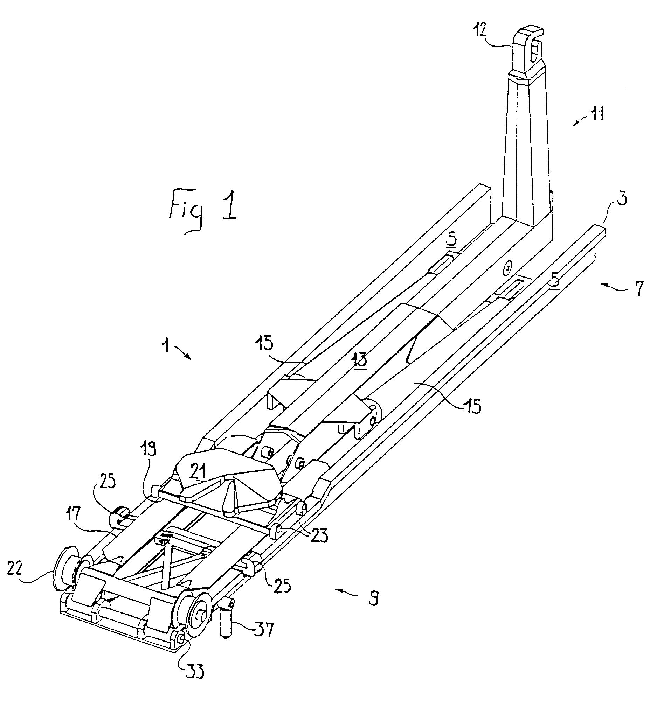

D'autres particularités et avantages de l'invention ressortiront de la description ci-après, référence étant faite aux dessins annexés, d'une forme d'exécution particulière dans laquelle
- la Figure 1 est une vue en perspective du dispositif de l'invention,

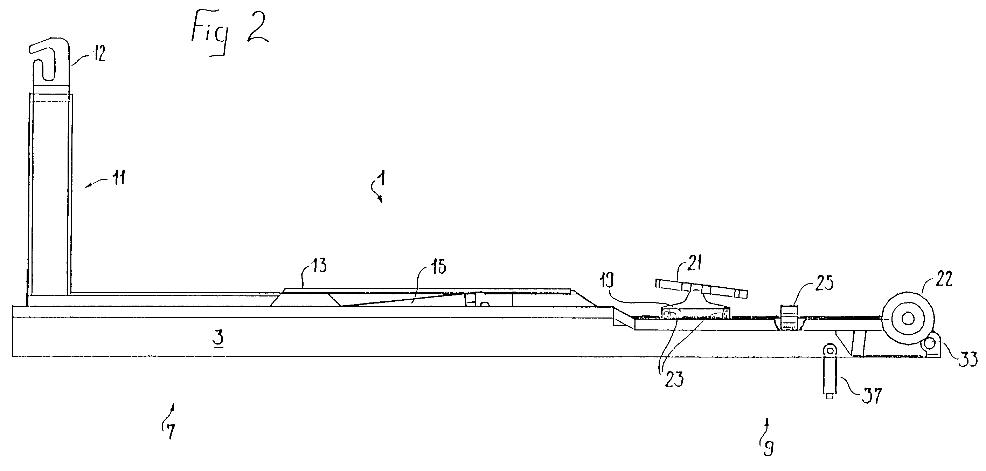

- la Figure 2 est une vue en élévation du même dispositif,
- la Figure 3 est une vue en élévation du même dispositif, auquel une semi-remorque est attelée,
- la Figure 4 est une vue en élévation montrant le dispositif de l'invention, sur lequel un conteneur est maintenu,
- la Figure 5 est une vue en élévation montrant le dispositif de l'invention en position de basculement d'un conteneur pour la vidange,
- la Figure 6 est une vue en perspective du dispositif de l'invention dans la même position que la Figure 5,
- La Figure 7 est une vue en perspective qui montre un véhicule suivant l'invention muni du dispositif montre dans les figures précédentes.

Le dispositif 1 représenté dans les figures est une forme d'exécution préférée de l'invention.

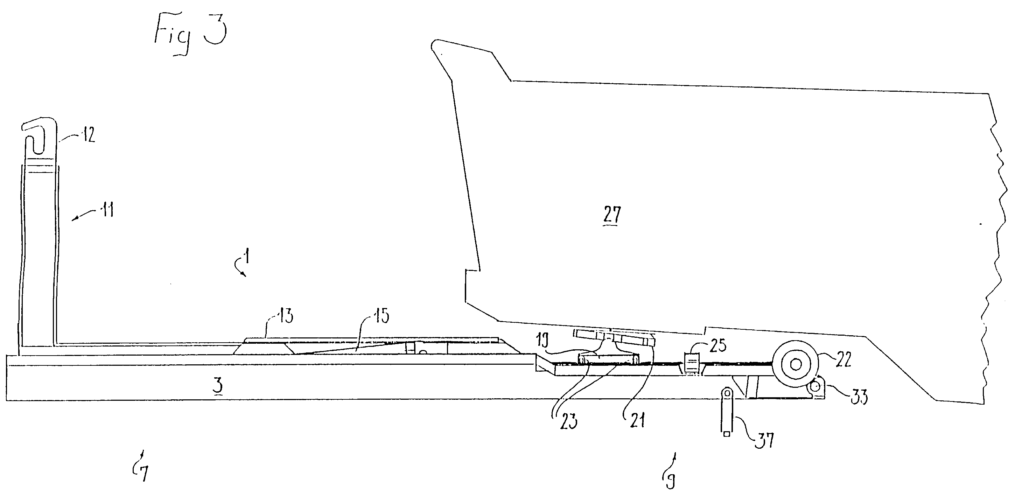

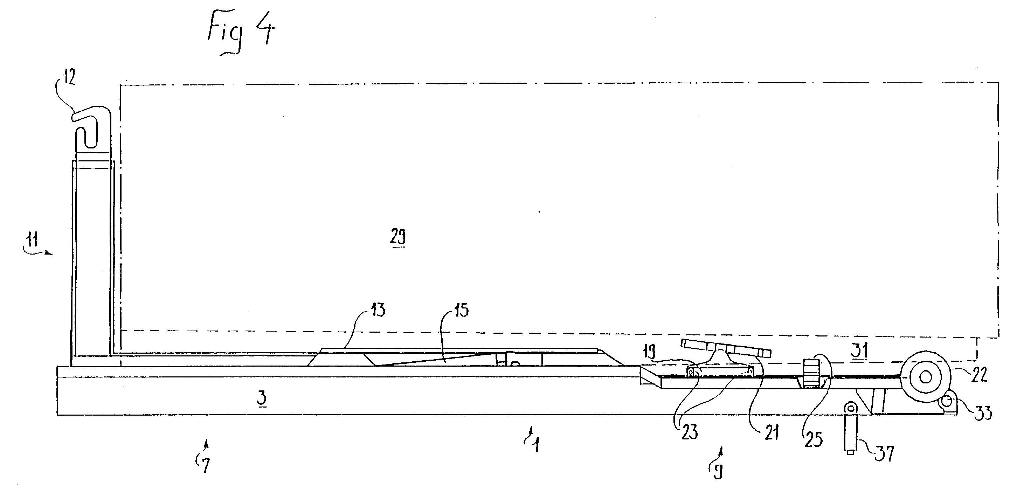

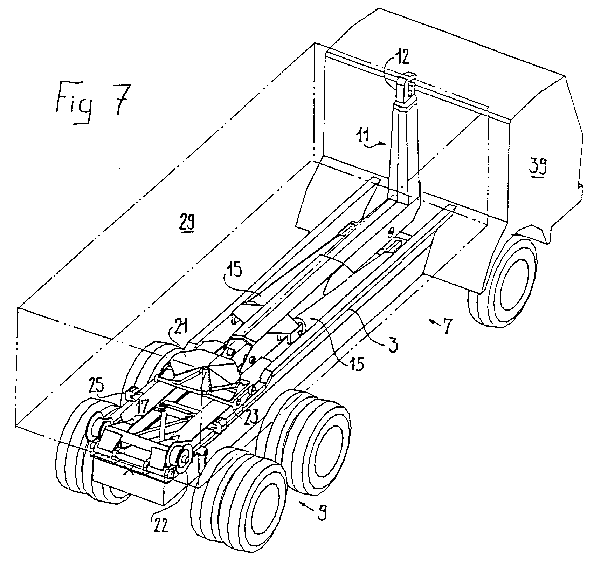

Un bâti 3 comporte deux poutres parallèles 5. Le bâti 3 comporte une partie avant 7 destinée à être fixée vers l'avant du châssis d'un véhicule 39 (représenté à la figure 7). Cette partie avant 7 est apte à supporter le châssis 31 d'un conteneur 29 (représenté à la Fig. 4). Le bâti 3 est apte à supporter des forces importantes lors de l'attelage et de la traction d'une semi-remorque 27 (représentée à la Fig.3).

Le dispositif 1 est également apte à supporter des forces importantes telles que celles qui s'exercent lors de la manutention et du maintien d'un conteneur.

Sa forme est simple, et il est apte à être monté sur tous les types de véhicules tracteurs et de véhicules de manoeuvre couramment utilisés.

La partie arrière 9 du bâti 3 est surbaissée par rapport à sa partie avant 7. Les poutres 5 ont une hauteur inférieure dans cette partie arrière 9 du bâti 3 par rapport à la hauteur des poutres correspondantes utilisées dans la partie avant 7.

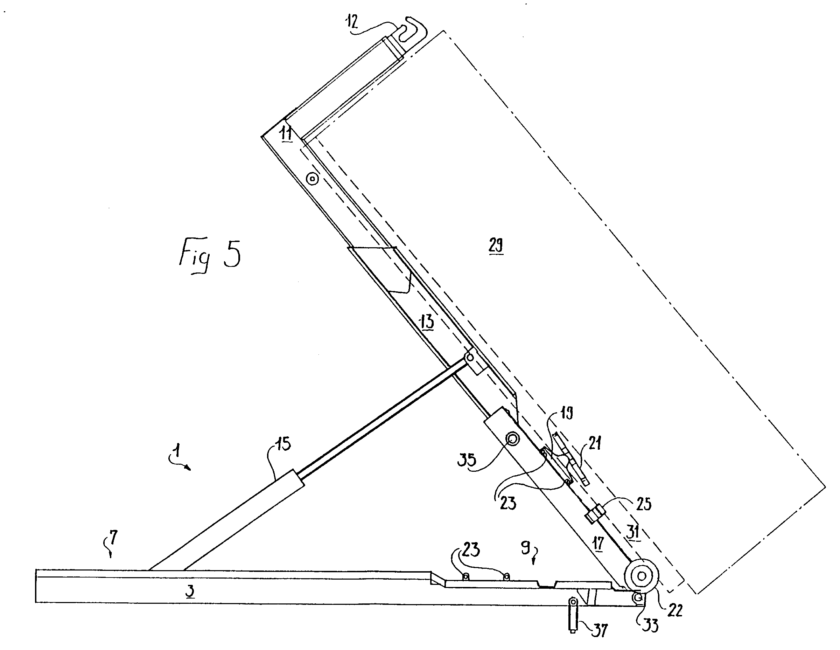

Le dispositif 1 comporte un bras basculant 11 terminé par un crochet 12 apte à saisir un organe correspondant (non représenté) prévu sur un conteneur. Ce bras 11 est en partie abrité dans un caisson 13. Ce caisson 13 est susceptible d'être actionné par deux vérins 15 fixés à la partie avant 7 du bâti 3 (voir figure 5).

Le bras basculant 11 comporte une partie télescopique également actionnée par un vérin.

La partie arrière 9 du bâti 3 comporte un basculeur 17. Une embase 19 sur laquelle une sellette 21 est boulonnée, est montée sur le basculeur 17. La sellette 21 permet l'attelage d'une semi-remorque (non représentée). Des moyens de verrouillage 23 de l'embase 19 au bâti 3 sont prévus. Comme expliqué en détail ci-dessous en se référant plus particulièrement à la Figure 3, ces moyens 23 sont utilisés en particulier lors de l'attelage d'une semi-remorque à la sellette 21.

Des roues à gorge 22 dont la fonction est explicitée plus bas sont prévues à la partie arrière du basculeur 17.

Un dispositif de verrouillage hydraulique 25 standard est également fixé sur le basculeur 17. Ce dispositif 25 est utilisé pour le verrouillage de conteneurs.

Des renforts (non représentés sur les figures) sont prévus dans le bâti 3, le caisson 13 du bras basculant 11 et le basculeur 17.

La Figure 3 représente un dispositif 1 utilisé comme moyen d'attelage pour une semi-remorque 27. Celle-ci est arrimée à la sellette 21. L'abaissement relatif de la partie arrière 9 du bâti 3 a comme conséquence que les manoeuvres de la semi-remorque 27 ne sont pas gênées.

En effet, aucun obstacle ne heurte le bas de la semi-remorque 27 lors de l'attelage de celle-ci à la sellette 21. En outre, lorsque le véhicule tourne, le pivotement subséquent de la semi-remorque 27 se fait également sans problème.

Il faut noter que grâce au fait que le bâti 3 est surbaissé dans sa partie arrière, les poulies 22 ne constituent pas non plus un obstacle au mouvement de la semi-remorque 27.

Les moyens de verrouillage 23 de l'embase 19 au bâti 3 consistent par exemple en une goupille qui traverse d'une part un orifice prévu dans l'embase 19 et d'autre part un orifice correspondant prévu dans le bâti 3.

Il est évident qu'un tel type de verrouillage peut également être remplacé par un verrouillage hydraulique ou électro-magnétique, éventuellement commandé à distance.

La Figure 4 représente le même dispositif 1 utilisé comme moyen de maintien d'un conteneur 29. Le châssis 31 de ce conteneur 29 est maintenu en place sur la partie avant 7 du bâti 3 et repose également sur les roues à gorge 22.

Les roues à gorge 22 servent comme guides pendant la mise en place du conteneur 29. Dans une forme d'exécution préférée de l'invention, ces roues à gorge 22 sont des roues à gorge à commande hydraulique avec déplacement latéral permettant de prendre aisément des conteneurs ne se trouvant pas dans l'axe longitudinal du véhicule.

Après la mise en place, le dispositif de verrouillage hydraulique 25 standard empêche tout mouvement non désiré du conteneur pendant le transport.

Pendant le maintien du conteneur 29, les axes 33, 35 du basculeur 17 peuvent être bloqués par un dispositif de blocage 37. Ainsi, un haut degré de stabilité et de sécurité est assuré.

On voit que la disposition de la sellette 21 sur le basculeur 17 est telle que la mise en place et le maintien d'un conteneur 29 sur le bâti 3 ne sont absolument pas gênés par celle-ci.

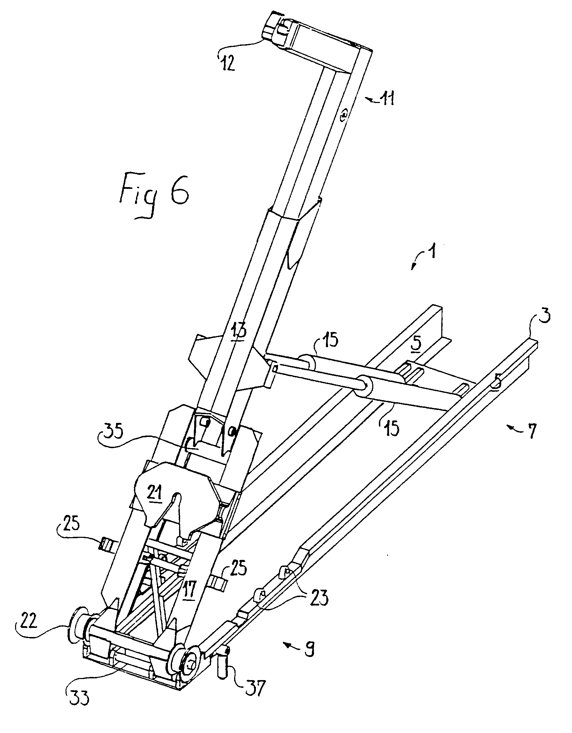

Comme on le voit aux Figures 5 et 6, cette disposition de la sellette 21 ne gêne pas non plus le conteneur 29 en position de vidange.

Le dispositif de blocage 37 et le dispositif de verrouillage hydraulique 25 assurent également la sécurité pendant la vidange du conteneur par basculement.

Un véhicule tracteur 39 muni d'un dispositif 1 suivant l'invention est représenté à la Figure 7.

La sellette 21 occupe une position normalisée pour un tracteur de semi-remorque, par exemple à la hauteur d'environ 1,5 m du sol et à une distance d'environ 0,1 m en avant du centre de gravité du train arrière du véhicule.

La position du bras basculant 11 par rapport au véhicule 39 est identique à celle d'un bras basculant par rapport à un véhicule tracteur ordinaire destiné à la manutention de conteneurs.

Les opérations de maintien et de manutention de conteneurs effectuées grâce au dispositif suivant l'invention ne sont pas différentes de celles effectuées par les dispositifs classiques.

Les opérations d'attelage d'une semi-remorque, suivant l'invention, ne sont pas non plus différentes de celles effectuées par avec un véhicule tracteur muni de moyens d'accrochage classiques de semi-remorque.

L'invention permet donc d'obtenir un véhicule polyvalent dont les performances sont équivalentes à celles de deux véhicules classiques distincts. Bien que l'invention ait été décrite en faisant référence à une forme d'exécution préférée dans laquelle le dispositif est monté sur un bâti apte à être fixé sur le châssis du véhicule, on comprendra aisément que l'invention couvre également des formes d'exécution dans lesquelles un tel dispositif fait partie intégrante du châssis du véhicule.

L'invention a comme avantage de réduire le nombre de transbordements d'une marchandise, ce qui a comme conséquence des transports à moindre coût et avec un personnel réduit.

Un autre avantage est la sécurité accrue due à la permanence de l'installation du dispositif d'attelage et à l'absence de manoeuvres pour l'échange.

L'invention a également comme avantage que l'on peut charger le véhicule de n'importe quel type de conteneur en rapport avec sa puissance, tels que, par exemple, une grue ou une benne à béton, et que l'on peut fixer sur le basculeur n'importe quel type de sellette.

## Revendications

1. Dispositif (1) destiné à être monté sur le châssis d'un véhicule (39) de transport routier ou de manoeuvre, comportant des moyens de manutention et de maintien pour conteneur (29) comportant
- un bâti (3) en forme de cadre allongé apte à être fixé au châssis du véhicule (39), ce bâti (3) comportant deux poutres (5) destinées à être disposées sensiblement suivant la direction de progression du véhicule (39), des extrémités avant (7) et arrière (9) destinées à être disposées respectivement vers l'avant et vers l'arrière du véhicule (39),
- un basculeur (17) comportant une extrémité arrière et monté à pivotement autour d'un premier axe (33) horizontal perpendiculaire à la direction de progression du véhicule, porté par la partie arrière du bâti (3) et une extrémité avant disposée en direction de l'extrémité avant (7) du bâti (3),
- un bras basculant (11) comportant une extrémité arrière montée à pivotement autour d'un second axe horizontal (35), parallèle au dit premier axe horizontal (33), ce second axe horizontal (35) étant porté par la partie avant du basculeur (17), et une extrémité avant disposée en direction de l'extrémité avant du bâti, cette extrémité avant étant munie de moyens aptes à saisir un conteneur pour le charger sur le véhicule (39) ou pour l'en décharger,
- des moyens d'actionnement (15) aptes à faire pivoter ledit bras basculant (11) autour dudit premier axe (33) ou autour dudit second are (35).
- des roues à gorge (22) montées sur des axes horizontaux parallèles au dit premier axe (33) horizontal, aptes à guider le châssis (31) d'un conteneur (29), qui supportent la face inférieure de ce conteneur (29), lorsque celui-ci est chargé ou déchargé du véhicule (39),
- des moyens de verrouillage (25) aptes à fixer un conteneur sur ledit dispositif.
caractérisé en ce qu'il comporte - des moyens d'attelage (21) pour une semi-remorque consistant en une sellette (21) apte à recevoir une cheville ouvrière d'une semi-remorque, la dite sellette (21) étant fixée sur le basculeur (17), la position de ladite sellette étant telle qu'elle ne gêne ni les manoeuvres d'une semi-remorque (27) couplée à ladite sellette (21), ni la manoeuvre d'un conteneur (29) fixé au-dessus de ladite sellette (21).

2. Dispositif (1) suivant la revendication 1, caractérisé en ce qu'il comporte en outre un moyen (37) apte à bloquer la position du basculeur (17) par rapport au bâti (3).

3. Dispositif (1) suivant l'une ou l'autre des revendications 1 et 2, caractérisé en ce que lesdits moyens d'actionnement sont des vérins hydrauliques (15).

4. Dispositif (1) suivant l'une quelconque des revendications 1 à 3, caractérisé en ce que ledit bras basculant (11) est un bras télescopique.

5. Dispositif (1) suivant la revendication 4, caractérisé en ce que ledit bras basculant (11) télescopique est muni d'un vérin hydraulique.

6. Dispositif (1) suivant l'une quelconque des revendications précédentes, caractérisé en ce que la sellette (21) comporte une embase (19) sur laquelle la partie supérieure de la sellette (21) est montée à pivotement autour d'un axe horizontal perpendiculaire à la direction d'avancement du véhicule (39), le dispositif (1) étant pourvu de moyens (23) aptes à verrouiller l'embase (19) de la sellette (21) par rapport au bâti (3), en sorte que lorsque le dispositif (1) est utilisé pour l'attelage d'une semi-remorque (27), ces moyens de verrouillage (23) permettent de transmettre directement au bâti (3) les sollicitations imposées à l'embase (19) de la sellette (21).

7. Dispositif suivant l'une quelconque des revendications 1 à 6, caractérisé en ce que le bâti (3) comporte
- une partie avant (7), vers le côté du bâti (3) destiné à être fixé vers l'avant du châssis du véhicule (39) apte à supporter le châssis (31) d'un conteneur (29) et
- une partie arrière (9) surbaissée par rapport à la partie avant (7) de façon telle que cette partie arrière (9) surbaissée ne gêne pas les manoeuvres d'une semi-remorque (27) qui serait accrochée à la sellette (21), la partie arrière (9) du dispositif (1) comportant latéralement de part et d'autre au moins un élément de support (22) apte à supporter la partie arrière du châssis (31) du conteneur (29), lorsque ce conteneur (29) est chargé sur le véhicule (39).

8. Dispositif (1) suivant la revendication 7 caractérisé en ce que lesdits éléments de support sont constitués par les roues à gorge (22).

9. Dispositif (1) suivant l'une quelconque des revendications précédentes, caractérisé en ce que lorsque le dispositif (1) est monté sur le châssis du véhicule (39), ladite sellette (21) occupe une position normalisée pour un tracteur de semi-remorque (27).

10. Dispositif (1) suivant l'une quelconque des revendications précédentes, caractérisé en ce que lorsque le dispositif (1) est monté sur le châssis du véhicule (39), la sellette (21) est située sensiblement à 1,5 m du sol.

11. Dispositif (1) suivant l'une quelconque des revendications précédentes, caractérisé en ce que lorsque ledit dispositif (1) est monté sur le châssis du véhicule, l'axe de la sellette (21) est situé sensiblement à 0,1 m en avant du centre de gravité du train arrière du véhicule.

12. Véhicule (39) de transport routier ou de manoeuvre caractérisé en ce qu'il est muni d'un dispositif (1) suivant l'une quelconque des revendications précédentes.

13. Véhicule (39) suivant la revendication 12 caractérisé en ce que ledit véhicule (39) est muni d'un crochet d'attelage permettant de tracter une remorque.

## Claims

1. Device (1) intended to be mounted on the chassis of a road haulage or handling vehicle (39), including handling and holding means for a container (29) including
- a bed (3) in the form of an elongate frame which can be fixed to the chassis of the vehicle (39), this bed (3) including two girders (5) which are intended to be arranged substantially in the direction of travel of the vehicle (39), front (7) and rear (9) ends intended to be arranged respectively towards the front and towards the rear of the vehicle (39),
- a tipper mechanism (17) including a rear end and mounted so that it can pivot about a first horizontal axle (33) perpendicular to the direction of travel of the vehicle, carried by the rear part of the bed (3) and a front end arranged in the direction of the front end (7) of the bed (3),
- a tipper arm (11) including a rear end mounted so that it can pivot about a second horizontal axle (35) parallel to the said first horizontal axle (33), this second horizontal axle (35) being carried by the front part of the tipper mechanism (17), and a front end arranged in the direction of the front end of the bed, this front end being fitted with means capable of grasping hold of a container in order to load it on to the vehicle (39) or in order to unload it therefrom,
- actuating means (15) capable of making the said tipper arm (11) pivot about the said first axle (33) or about the said second axle (35),
- grooved wheels (22) mounted on horizontal axles parallel to the said first horizontal axle (33), capable of guiding the chassis (31) of a container (29), and which support the lower face of this container (29) as the latter is loaded or unloaded from the vehicle (39),
- locking means (25) capable of fixing a container on the said device,
characterized in that it includes coupling means (21) for a semitrailer consisting of a fifth wheel (21) capable of receiving the kingpin of a semitrailer, the said fifth wheel (21) being fixed on the tipper mechanism (17), the position of the said fifth wheel being such that it impedes neither the manoeuvres of a semitrailer (27) hitched to the said fifth wheel (21), nor the manoeuvres of a container (29) fixed above the said fifth wheel (21).

2. Device (1) according to Claim 1, characterized in that it further includes a means (37) capable of blocking the position of the tipper mechanism (17) with respect to the bed (3).

3. Device (1) according to either of Claims 1 and 2, characterized in that the said actuating means are hydraulic rams (15).

4. Device (1) according to any one of Claims 1 to 3, characterized in that the said tipper arm (11) is a telescopic arm.

5. Device (1) according to Claim 4, characterized in that the said telescopic tipper arm (11) is equipped with a hydraulic ram.

6. Device (1) according to any one of the preceding claims, characterized in that the fifth wheel (21) includes a base (19) on which the upper part of the fifth wheel (21) is mounted in such a way that it can pivot about a horizontal axis perpendicular to the direction of travel of the vehicle (39), the device (1) being provided with means (23) capable of locking the base (19) of the fifth wheel (21) with respect to the bed (3) in such a way that when the device (1) is used to couple a semitrailer (27), these locking means (23) allow the stresses imposed on the base (19) of the fifth wheel (21) to be transmitted directly to the bed (3).

7. Device according to any one of Claims 1 to 6, characterized in that the bed (3) includes
- a front part (7) towards the side of the bed (3) which is intended to be fixed towards the front of the chassis of the vehicle (39) capable of supporting the chassis (31) of a container (29) and
- a rear part (9) which is lowered with respect to the front part (7) in such a way that this lowered rear part (9) does not impede the manoeuvres of a semitrailer (27) which might be coupled to the fifth wheel (21), the rear part (9) of the device (1) including laterally on each side at least one support element (22) capable of supporting the rear part of the chassis (31) of the container (29) when this container (29) is loaded on to the vehicle (39).

8. Device (1) according to Claim 7, characterized in that the said support elements consist of grooved wheels (22).

9. Device (1) according to any one of the preceding claims, characterized in that when the device (1) is mounted on the chassis of the vehicle (39), the said fifth wheel (21) occupies a position which is standardized for the semitrailer tractor unit (27).

10. Device (1) according to any one of the preceding claims, characterized in that when the device (1) is mounted on the chassis of the vehicle (39), the fifth wheel (21) is substantially 1.5 m off the ground.

11. Device (1) according to any one of the preceding claims, characterized in that when the said device (1) is mounted on the chassis of the vehicle, the axis of the fifth wheel (21) is substantially 0.1 m forward of the centre of gravity of the rear axle set of the vehicle.

12. Road haulage or handling vehicle (39), characterized in that it is equipped with a device (1) according to any one of the preceding claims.

13. Vehicle (39) according to Claim 12, characterized in that the said vehicle (39) is equipped with a coupling hook allowing a trailer to be towed.

## Patentansprüche

1. Vorrichtung (1) zur Anbringung am Fahrgestell eines Straßentransport- oder Manövrier-Fahrzeugs (39), welche Handhabungs- und Haltemittel für einen Container (29) aufweist, mit
- einem Gestell (3) in Form eines länglichen Rahmens, der am Fahrgestell des Fahrzeugs (39) befestigbar ist, wobei dieses Gestell (3) zwei Träger (5), die dazu bestimmt sind, im wesentlichen gemäß der Fortbewegungsrichtung des Fahrzeugs (39) angeordnet zu sein, sowie ein vorderes (7) und ein hinteres Ende (9) aufweist, die dazu bestimmt sind, zur Vorder- bzw. zur Rückseite des Fahrzeugs (39) hin angeordnet zu sein,
- einem Kipper (17), welcher ein hinteres Ende aufweist und um eine erste, horizontale, zur Fortbewegungsrichtung des Fahrzeugs normale Achse (33) schwenkbar montiert ist und auf dem hinteren Teil des Gestells (3) gelagert ist, sowie ein vorderes Ende, das in Richtung des vorderen Endes (7) des Gestells (3) angeordnet ist,
- einem Kipparm (11), welcher ein hinteres Ende, das schwenkbar um eine zweite horizontale Achse (35), parallel zur ersten horizontalen Achse (33), montiert ist, wobei diese zweite horiontale Achse (35) durch den vorderen Teil des Kipper (17) getraen wird, und ein vorderes Ende aufweist, das in Richtung des vorderen Endes des Gestells angeordnet ist, wobei dieses vordere Ende mit Mitteln zum Ergreifen eines Containers versehen ist, um diesen auf das Fahrzeug (39) aufzuladen oder von ihm abzuladen,
- Betätigungsmitteln (15) zum Kippen des Kipparmes (11) um die erste Achse (33) oder um die zweite Achse (35),
- auf horizontalen Achsen parallel zur ersten horizontalen Achse (33) montierten Rillenrädern (22) zum Führen des Gestells (31) eines Containers (29), die die Unterseite dieses Cotainers (29) abstützen, wenn dieser auf das Fahrzeug (39) aufgeladen oder von ihm abgeladen wird,
- Verriegelungsmitteln (25) zum Fixieren eines Containers auf dieser Vorrichtung,
dadurch gekennzeichnet, daß sie Kupplungsmittel (21) für einen Sattelanhänger aufweist, bestehend aus einem Sattel (21) zur Aufnahme eines Arbeitszapfens eines Sattelanhängers, wobei der Sattel (21) auf dem Kipper (17) fixiert ist und wobei die Position dieses Sattels derart ist, daß er weder das Manövrieren eines an diesen Sattel (21) gekuppelten Sattelanhängers (27), noch das Manövrieren eines oberhalb dieses Sattels (21) fixierten Containers (29) beeinträchtigt.

2. Vorrichtung (1) nach Anspruch 1, dadurch gekennzeichnet, daß sie weiters ein Mittel (37) zum Blockieren der Position des Kippers (17) relativ zum Gestell (3) aufweist.

3. Vorrichtung (1) nach Anspruch 1 oder 2, dadurch gekennzeichnet, daß die Betätigungsmittel Hydraulikzylinder (15) sind.

4. Vorrichtung (1) nach einem der Ansprüche 1 bis 3, dadurch gekennzeichnet, daß der Kipparm (11) ein Teleskoparm ist.

5. Vorrichtung (1) nach Anspruch 4, dadurch gekennzeichnet, daß der Teleskop-Kipparm (11) mit einem Hydraulikzylinder versehen ist.

6. Vorrichtung (1) nach einem der vorhergehenden Ansprüche, dadurch gekennzeichnet, daß der Sattel (21) einen Sockel (19) hat, auf dem der Oberteil des Sattels (21) um eine horizontale, zur Fortbewegungsrichtung des Fahrzeugs (39) normale Achse schwenkbar montiert ist, wobei die Vorrichtung (1) mit Mitteln (23) zum Verriegeln des Sockels (19) des Sattels (21) relativ zum Gestell (3) ausgestattet ist, so daß, wenn die Vorrichtung (1) zum Ankuppeln eines Sattelanhängers (27) verwendet wird, diese Verriegelungsmittel (23) eine direkte Übertragung der auf den Sockel (19) des Sattels (21) aufgebrachten Belastungen auf das Gestell (3) erlauben.

7. Vorrichtung nach einem der Ansprüche 1 bis 6, dadurch gekennzeichnet, daß das Gestell (3) aufweist:
- einen vorderen Teil (7), gegen die Seite des Gestells (3) hin, die zur Befestigung gegen die Vorderseite des Fahrgestells des Fahrzeugs (39) hin bestimmt ist, zum Abstützen des Gestells (31) eines Containers (29), und
- einen hinteren Teil (9), der in bezug auf den vorderen Teil (7) derart abgesenkt ist, daß dieser hintere, tiefer gelegene Teil (9) das Manövrieren eines Sattelanhängers (27), der mit dem Sattel (21) gekuppelt ist, nicht beeinträchtigt, wobei der hintere Teil (9) der Vorrichtung (1) beiderseits seitlich mindestens ein Stützelement (22) zum Abstützen des hinteren Teils des Gestells (31) des Containers (29), wenn dieser Container (29) auf dem Fahrzeug (39) aufgeladen ist, aufweist.

8. Vorrichtung (1) nach Anspruch 7, dadurch gekennzeichnet, daß die Stützelemente durch die Rillenräder (22) gebildet sind.

9. Vorrichtung (1) nach einem der vorhergehenden Ansprüche, dadurch gekennzeichnet, daß bei Anbringung der Vorrichtung (1) auf dem Fahrgestell des Fahrzeugs (39) der Sattel (21) eine Standard-Position für einen Sattelanhänger(27)-Schlepper einnimmt.

10. Vorrichtung (1) nach einem der vorhergehenden Ansprüche, dadurch gekennzeichnet, daß sich bei Anbringung der Vorrichtung auf dem Fahrgestell des Fahrzeugs (39) der Sattel (21) im wesentlichen 1,5 m über dem Boden befindet.

11. Vorrichtung (1) nach einem der vorhergehenden Ansprüche, dadurch gekennzeichnet, daß sich bei Anbringung der Vorrichtung (1) auf dem Fahrgestell des Fahrzeugs die Achse des Sattels (21) im wesentlichen 0,1 m vor dem Schwerpunkt des hinteren Fahrwerks des Fahrzeugs liegt.

12. Straßentransport- oder Manövrier-Fahrzeug (39), dadurch gekennzeichnet, daß es mit einer Vorrichtung (1) nach einem der vorhergehenden Ansprüche versehen ist.

13. Fahrzeug (39) nach Anspruch 12, dadurch gekennzeichnet, daß das Fahrzeug (39) mit einem Kuppelhaken versehen ist, der das Ziehen eines Anhängers ermöglicht.
